# EUROPEAN PATENT APPLICATION

(11) **EP 2 698 657 A1**
(43) Date of publication of application: **19.02.2014**
(21) Application number: 13193208.9
(22) Date of filing: 06.10.2009
(51) Int. Cl.: G02B 6/44, G02B 6/00, H01B 11/22, H02G 3/03, H02G 3/08, H04L 29/14, C08K 3/34

(54) **Communications cable and method of making same**

(30) Priority: 06.10.2008 US 246445
(62) Divisional of application: 09818864.2
(71) Applicant: Woosnam, Calvin H., Coquitlam, British Columbia V3B 7P3 (CA)
(72) Inventor: Woosnam, Calvin H., Coquitlam, British Columbia V3B 7P3 (CA)
(74) Representative: Carpmaels & Ransford LLP

(57) **Abstract**

A communications cable and method for making same wherein a communications cable is able to withstand significantly higher thermal temperatures than conventional fiber whether it be general purpose, or rated as Plenum/Riser rating, or even MIL Spec type cables. A core fiber glass material with at least an 427^{o}C (800 Fahrenheit) degree operating ability allows the communications cable to survive in high heat or stress conditions. A polyimide coating on the outside of the fiber is a high temperature resistent material and lends to this high operating temperature capability. By containing and protecting an optical pair of these fibers or even up to 4 glass fibers within a silicone rubber 1 mm diameter buffer tube, thermal protection of the high temperature glass within is increased. A single buffer tube type product and market that as a mini solution for fiber optic requirements within equipment or we individually or group wise mechanically protect these buffer tubes. The choice and decision to apply 2 layers of opposing woven aramid/KEVLAR™ fibers now begins to apply an enhanced tensile strength capability resulting in significant increase of currently available fiber optic cables. Once this mechanical protection layer has been applied, a second, but thicker, layer of silicone rubber is applied as an outer protection jacket either over the single paired Duplex Cable or the 24 Pair or larger cable design.

## Description

### CROSS-REFERENCES TO RELATED APPLICATIONS

This application is a continuation-in-part of and claims the benefit for priority from U.S. Provisional Application No. 60/886,905 filed January 26, 2007, and U.S. NonProvisional Patent Application No. 12/021,076 tided NETWORKED COMMUNICATIONS SYSTEM AND SEGMENT ADDRESSABLE COMMUNICATIONS ASSEMBLY BOX, CABLE AND CONTROLLER filed January 28, 2008, both said applications being incorporated herein by reference in their entireties.

### BACKGROUND OF THE INVENTION

Fiber Optic cables typically exist in two major categories, those being Single Mode and Multi-Mode. Single mode is typically used for longer uninterrupted cable runs such as metropolitan outside networks and long distance wide area networks, where Multi-Mode is used for shorter distances such as within buildings. Multi-Mode Fiber Optic cables typically create much more threat of damage due to structural fires and the requirement to sustain significantly higher temperatures.

Fiber Optic cables using Multi-Mode fiber typically have distance limitations due to the optical carrying characteristics which degenerate optical signals to an unusable state either by attenuation or scrambling resulting in unusable signal after 3000 feet.

Fiber Optic cables used inside buildings, such as the type described above when used in commercial buildings generally carry a Plenum or Riser rating, meaning they must be able withstand temperatures of at least 90 Centigrade (200 Fahrenheit) degrees. As such, their outer jacket material is required to not sustain or permit a migration of any fire when subjected to a flame either in a vertical Riser condition or in a horizontal air Plenum configuration. Cables without this flame retardant additive typically can cause fire migration and are generally illegal by local and National building codes.

Fiber Optic cables defined as Plenum or Riser Standards qualified by any respective Standards Organization, such as (UL) Underwriters Laboratories (USA) or (CSA) Canadian Standards Association or other standards organization as registered or recognized in manycountries typically use fire retardant material added to a PVC (poly vinyl chloride) or Teflon type TEP (Thermally Enhanced Plastic). PVC type plastics typically burn or melt at temperatures of approximately 400 degrees Fahrenheit. Teflon type jackets typically start to burn or melt at 600 degrees Fahrenheit.

Fiber Optic cables typically use a wrap or semi woven single layer of multiple strands of aramid or KEVLAR™ type fibers. This weaving or wrapping over a 1/16^{th} inch diameter core buffer tube holding the optical fibers acts as a strain relief system providing 100+foot pounds of strain relief in the longitudinal direction, taking the load off the fragile fibers contained within the buffer tube. This strain relief mechanism allows for pulling of the optical cables through a conduit system without the fear of damaging the optical fibers from excessive longitudinal strain being applied to them.

Typically, duplex Multi-Mode fiber cables use a 1/16^{th} inch diameter buffer tube to contain the glass optical fibers within, and this tube is typically made of TEFLON™ or a similar clear plastic. The diameter of this tube is minimal, yet sufficient to contain the duplex color keyed fibers and may contain up to 4 discrete fibers.

Typical duplex Multi-Mode or Single Mode fiber cables use a color jacket over the 50 µm and 62.5 µm. or 9 µm respectivelydiameter fibers. This color jacket, in turn, is covered with a clear coat polyimide coating that is similarly rated to 200° F or 90° C maximum active operating temperature. This base glass diameter is then coated, bringing the overall diameter of each strand of optical glass to 125 µm overall diameter regardless of whether the core glass fiber is 50 µm or 62.5 µm diameter. This results in 12.5 / 2 µm = 6.25 µm additional reinforcement over the glass for 50 µm Multi Mode Fiber. In comparison, the reduced overall diameter of Single mode fiber is only 9 µm in diameter and therefore significantly more susceptible to physical damage.

### SUMMARY

In one embodiment, the present communications cable and method for making same provides a high temperature duplex optical fiber system that is designed to operate over a much higher temperature range than current 90°C or 200°F Plenum/Riser rated cables. An embodiment incorporated within the present communications cable and method for making same provides a duplex 50 µm x 125 µm Multi-Mode fiber optic cable that is able to withstand more mechanical forces at higher temperatures than conventional 62.5 µm fiber and significantly more than Single Mode 9 µm fibers. Fabrication of this fiber optic cable in stages permits a core buffer tube design to facilitate a simple buffer tube only product minimizing space when strength is not required.

In another embodiment, the present communications cable and method for making same provides for a simple Duplex fiber jacketed cable with KEVLAR™ / aramid dual bias weave, and alternatively provides a individually buffer tubed 24 pair or higher multi channel cable all with the same base buffer tube component with KEVLAR™ / aramid overall reinforcing.

In the preferred embodiment of the present communications cable and method for making same, the resilience to highertemperatures and the higher mechanical damage resilience are afforded by design of a Multi-Mode fiber optic system. This typically limited length distribution system is greatly overcome by the later joining of fiber sections of up to 3000 feet in length through a media converter, thereby permitting unlimited or infinite lengths to be achieved.

In another embodiment of the present communications cable and method for making same, individual fibers comprising high temperature silicon based glass that withstand smaller diameter radius bends without significantly diminishing optical transmission capability. The resilience to bend radius reduction is on a magnitude of 5 to 10 times more turns then the normal number of small diameter bends previously achieved by the same amount of loss in any other fiber; this, once again significantly increases the efficiency of a cable and may even challenge anyhistorical feet length limits, generally 3000 feet, for Multi Mode cables.

The various embodiments described herein for the present communications cable and method for making same were derived from Applicant's experience with the repeated historical failure of conventional commercial cable known as Plenum or Riser rated cables. This antique classification for heat ratings of cables has been shown to repeatedly be ineffectual in building communications systems when fires threaten any area, thereby cutting off any communications path offered by these type cables. This historically makes fiber optic cable much more prone to failure then their copper counterparts. Communications saves lives and any time that those communications can be maintained during a threatening event like a fire, the more likely the loss of life will be reduced Applicant realized that a solution begins with the glass used in these cables and notoriously this type of high temperature glass and its associated high cost makes the normal solution almost unaffordable or unattainable. Applicant therefore has created a new and unique blend of silicon glass and outer silicone rubber jacketing and reduced the basic product diameter to a preferable 50 µm inner diameter glass fiber. This new high temperature glass combined with smaller diameter, yet thicker outer coatings, while still equaling the qualifying diameter for Multi-Mode fiber of preferably 125 µm offers added tensile and side impact resistance to mechanical damage for these types of fibers.

These two fibers, or paired optical fibers, are then preferably contained within a heat resistant silicone 1.5 mm diameter tube with 250 µm thick walls. This preferable configuration then becomes a buffer tube only "Mini Multi Mode Fiber" design for use in small confined spaces subject to higher temperatures where mechanical protection is not required.

In another embodiment for the present communications cable and method for making same, instead of using a single layer of crisscrossed woven aramid or KEVLAR™ type fibers, dual layers in opposing direction were chosen to enhance the longitudinal force or tensile strength of the protected optical fiber pair and silicone rubber buffer tube. In this embodiment, these dual opposing layers of aramid /KEVLAR™ material can either be singly applied to single silicone rubber buffer tube as in a Duplex design or can be clustered around multiple silicone rubber buffertubes as in the 24 pair, but not limited to, as described in the designs herein. In such case of the 24 pair design, a further inclusion of a Aramid / KEVLAR™ bundled core at the core of the cable significantly adds to the longitudinal force handling capability of this multi pair cable design.

In a preferred embodiment of the present communications cable and method for making same, the final thermal and mechanical protection layer is the unique application of silicone rubberonthe outer jacket of a cable. This outer jacket is approximately 1 mm thick with an overall outer diameter of 3.2 mm. A jacket is formed and applied in such a wayas to provide a tight fit over the aramid / KEVLAR™ fibers thereby eliminating any air pockets from forming which might promote combustibles or air circulation in high heat situations.

Embodiments disclosed herein overcome limitations and costs of current optical fiber cables while providing a significant increase in resistance to thermal damage typically associated with fiber optical fibers. In addition, embodiments of the present invention present new unobvious cable jacketing, longitudinal strength members, increased temperature handling capacity of the buffer tube component and improved high temperature optical glass.

Applicant provides a use of silicone rubber material as a substitute for various standards of plastics, thermally enhanced plastics and TEFLON™ , that significantly increases the thermal survivability of a communications cable. In addition, Applicant provides a use of an enhanced silica/ silicone blend that significantly increases resistance to thermal damage at high temperatures.

### BRIEF DESCRIPTION OF THE DRAWINGS

Illustrative embodiments of the present invention are described in detail below with reference to the attached drawing figures, which are incorporated by reference herein and wherein:

FIG. 1 is an illustration showing a cross-section of a communications cable according to an embodiment of the present invention;

FIG. 2 is an illustration showing a cross-section of a communications cable according to another embodiment of the present invention;

FIG. 3 is an illustration showing a cross-section of a communications cable according to yet another embodiment of the present invention;

FIG. 4 is a side view of a multi-fiber splice tray for an embodiment of the present invention.

### DETAILED DESCRIPTION OF THE PREFERRED EMBODIMENT

In the preferred embodiment of the present communications cable and method for making same, a high temperature optical glass is provided that is capable of withstanding temperatures in excess of the 800 degree Fahrenheit range. Preferably, 2- 50µm×125µm Multi-Mode fibers are both color coated and mechanically protect with a similarly high temperature polyimide plastic bring the overall diameterto 125 µm and leaving Buffer colors of Natural, and Blue for easy polarity identification. In the Quad design grouping additional Yellow and Red colors are used for further easy identification.

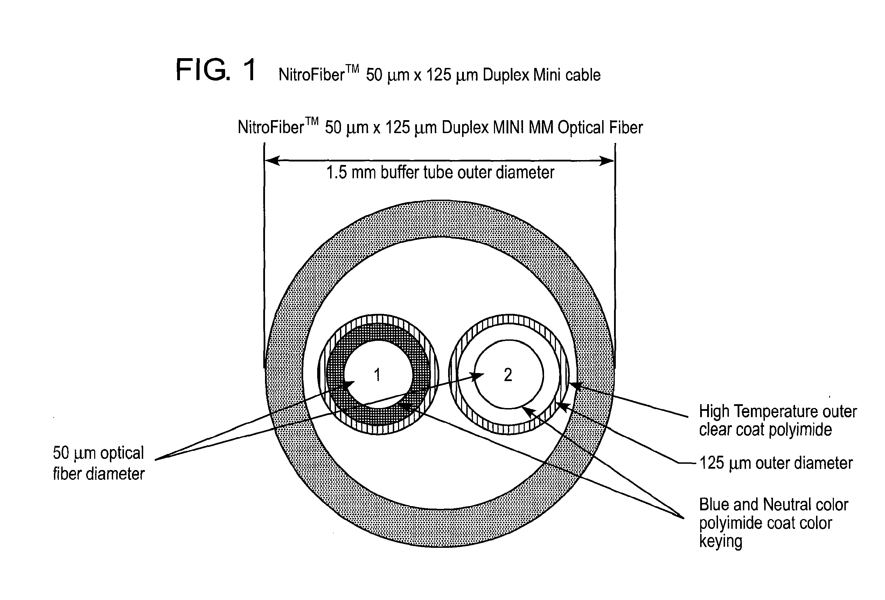

As shown in FIGS. 1-3, in a first step, preferably two and up to four optical fibers are placed within a high temperature protective silicone rubber buffer tube, to enhance their thermal handling properties. As shown in FIG.1, this silicone rubber buffertube is preferably approximately1 millimeter in outside diameter.

In FIG.1, the nature of the product at this stage with its thermal and mechanical enhancement can now be used in a separate product definition referred to as a Mini MMDuplex or Quad optical fiber design, suitable for use inside equipment where temperatures maybe elevated but mechanical damage is significantly reduced.

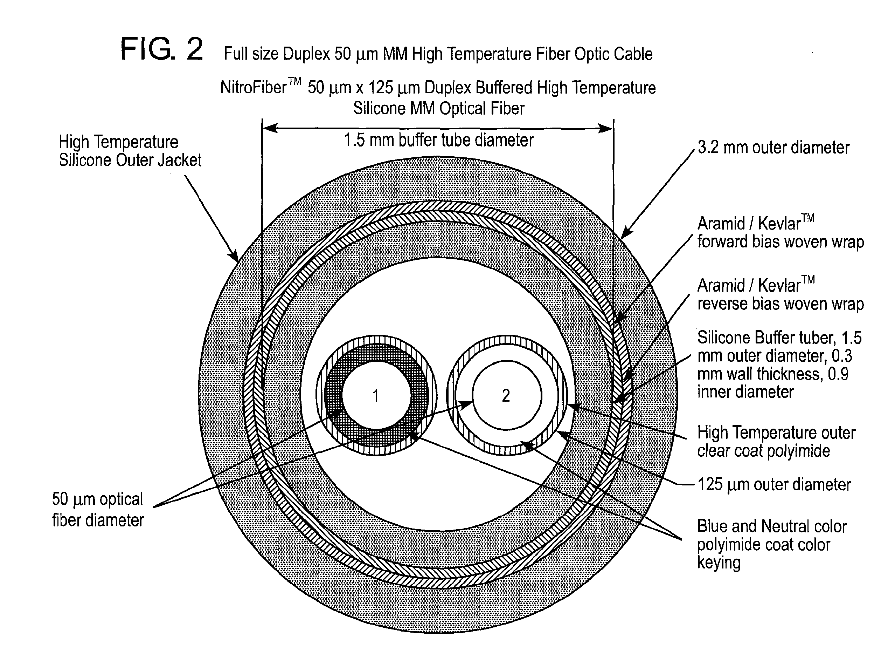

In a second step, a dual layer opposing directions woven aramid or KEVLAR™ type material is applied, providing enhanced tensile strength warding off forces that might otherwise damage the delicate glass fibers within. The individual multi strand nature of these woven strands adds significant longitudinal force handling capability. If only a single buffer tube is grouped thenthis is destined to be a Duplex or Quad Cable design, as shown in FIG. 2.

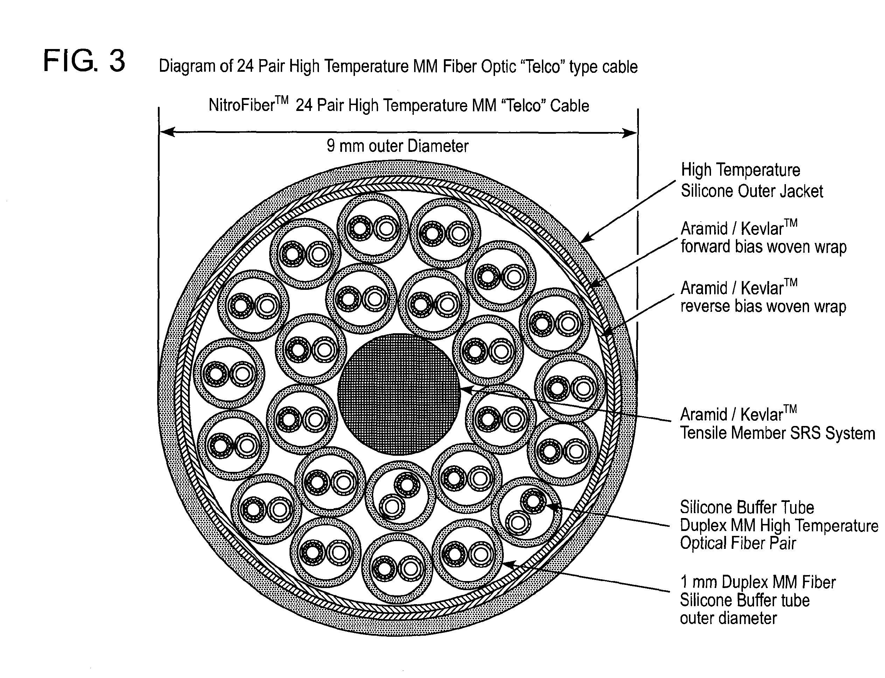

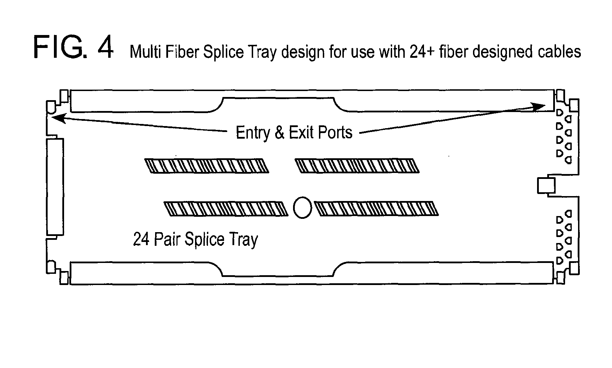

If the single duplex Mini buffer tube is required to be grouped into multiple channels within the same overall cable design, then the aramid / KEVLAR™ dual opposing woven layers can be placed over the entire group of buffered duplex fiber optic lines, as shown in FIG. 3. A reason for this individual grouping of Duplex lines within a single outer protective casing is to facilitate easy connectorizing of individual pairs. Similarly, if multiple channels are needed to be spliced or coupled then common race type splice tray may be used for thermal binding, as shown in FIG. 4.

As shown in FIGS. 2-3, in a third step, an outer protective jacket as described herein, is applied over the aramid / KEVLAR™ protective tensile strength members, which provides yet another heavier jacket of high temperature heat resistant silicone rubber.

In the preferred embodiment, the nominal maximum tensile load of the cable with the dual layers of aramid / KEVLAR™ woven yam is rated at 450 N during installation and with an actual in service rating of 200 N, supporting long suspended applications.

As shown in FIG. 3, in another embodiment, an additional 3.5 mm aramid / KEVLAR™ cordis placed within the center of the multi-paired cable, offering substantially more tensile strength capability for even greater load bearing ability. This central reinforcing cord can be secured at each cable end thereby transferring any longitudinal stress applied to the cable from affecting the delicate glass fibers within.

The aramid / KEVLAR™ material used within the strain relief system (SRS) is also of a higher than normal heat resistant nature, future insuring that no single component within the present communications cable and method for making same will lessen the survivability of the entire cable.

In an embodiment of the present communications cable and method for making same, fully assembled communications cable shown in FIG. 2 is approximately 3 mm in nominal diameter. In an embodiment shown in FIG. 3, the overall diameter similarly of a fully assembled communications cable is 9 mm. More or less pairs within a multi-pair cable will alter proportionately the diameter of the cable.

In the embodiment shown in FIG.1, the Multi Pair Telco type cable will not change in overall diameter should the pairing within each Duplex buffer tube be increased to 4 optical fibers from the existing 2 optical fibers.

The minimum bend radius of the communications cables shown in FIGS. 1-3 are rated as 15 x the nominal diameter of the either cable packaging during installation or loading, and 10 x the nominal diameter of the either cable while in service.

The high temperature optical glass and refractive coatings configuration of the packaging will preferably exhibit a standard loss ratio around a reduced 4 mm core at 100 turns of no more than 1.5 dB.

The operating temperature of the finished product in the embodiments shown in FIGS.1-3, may be -65°C (-85°F) to +250°C ( +482°F) while the storage non operating temperature may be - 40°C (-40°F) to +70°C ( +158°F).

The non physical stressed high temperature rating of the fiber remains in operation as long as there is no applied motion to the optical cable once the heat has been applied up to an including a temperature of 1200 degrees Fahrenheit.

The optical nature of the glass and associated refractive coatings will preferablyprovide no more than 1.5 dB / km at a nominal operating frequency of 1300 nm.

The previous detailed description is of a small number of embodiments for implementing the invention and is not intended to be limiting in scope. One of skill in this art will immediately envisage the methods and variations used to implement this invention in other areas than those described in detail. The following claims set forth a number of the embodiments of the invention disclosed with greater particularity.
The following statements also form part of the disclosure:
Statement 1. A communications system providing a fault-tolerant communications path for narrow and broad band communication comprising:
   one or more self-powered satellite units each providing signal information to at least one command console through a segmented cable assembly system;
   a central station that receives signal information from the at least one command console and relays signal information back to the command console wirelessly and via the segmented cable assembly system.
Statement 2. The communication system of statement 1, wherein the segmented cable assembly system is powered by a controller outfitted with a transceiver and an external high gain antenna.
Statement 3. The communication system of statement 1, wherein the segmented cable assembly system includes a repeater.
Statement 4. The communications system of statement 1, wherein the segmented cable assembly system includes a UWB radio and antenna.
Statement 5. A cable assembly comprising:
   one or more fixed length cable segments, each segment linked to a junction box having a repeater system to extend a signal communications range significantly further than 3000 feet.
Statement 6. The cable assembly of statement 5, wherein the each segment includes a metal casing and core bundle wrapped with an aerogel material.
Statement 7. The cable assembly of statement 5, wherein each segment includes a stress release system, each segment configured for 2600 pounds of longitudinal force.
Statement 8. The cable assembly of statement 5, wherein each segment will rebroadcast a signal selected from the group consisting of UWB, WiFi and RF.
Statement 9. The cable assembly of statement 5, wherein the cable assembly has no vertical or horizontal constraints.
Statement 10. The cable assembly of statement 5, wherein each segment will withstand temperatures in excess of current plenum and riser wiring standards.
Statement 11. The cable assembly of statement 5, wherein the junction box has plug-in circuit board.
Statement 12. The cable assembly of statement 5, wherein the junction box includes a raceway system to drop splice fiber optic channels for direct plug-in to one or more circuit board media converters.
Statement 13. The cable assembly of statement 5, wherein the junction box includes a thermal cooling system operable with an on-board CPU to prevent overheating and failure.
Statement 14. The cable assembly of statement 5, wherein the junction box is controlled by a separate controller.
Statement 15. A cable assembly comprising:
   one or more fixed length cable segments, each segment capable of withstanding temperatures in excess of current plenum and riser wiring standards, wherein each segment includes a high gauge metal casing and a core bundle wrapped with a heat resistant aerogel material.
Statement 16. The cable assembly of statement 15, wherein the core bundle includes one or more power conductors, one or more multi-mode fiber optic data channels, a coaxial cable and a high stress cable.

## Claims

1. An optical communication cable assembly comprising:
optical fibers comprising high temperature silicon-based glass that withstands temperatures in excess of 800 °F;
one or more buffer tubes for grouping optical fibers into channels;
dual layer, opposing direction, bias woven aramid or KEVLAR^{™} type fibers surrounding the one or more buffer tubes; and
an outer jacket surrounding the dual layer, opposing direction, bias woven aramid or KEVLAR^{™} type fibers.

2. The communication cable of claim 1, wherein between two and four optical fibers within each of the one or more buffer tubes.

3. The communication cable of claim 1, wherein the optical fibers withstand smaller diameter radius bends with a resilience to bend radius reduction on a magnitude of 5 to 10 times more turns.

4. The communication cable of claim 1, wherein the outer jacket is a thermal and mechanical protection layer comprising silicone rubber.

5. The communication cable of claim 4, wherein the outer jacket comprises an application of silicone rubber.

6. The communication cable of claim 1, wherein the optical fibers grouped into multiple paired channels, with each paired channel surrounded by one or more buffer tubes, and wherein the multiple paired channels are surrounded by the dual layer, opposing direction, bias woven aramid or KEVLAR^{™} type fibers.

7. The communication cable of claim 1, wherein the nominal maximum tensile load of the optical communication cable assembly is 450 N during installation and 200 N in service.

8. The communication cable of claim 1, further comprising an aramid or KEVLAR^{™} type cord within the center of the dual layer, opposing direction, bias woven aramid or KEVLAR^{™} type fibers.

9. The communication cable of claim 8, wherein the cord is approximately 3.5 mm in diameter.

10. The communication cable of claim 1, wherein the optical communication cable assembly is approximately 3 mm in nominal diameter or approximately 9 mm in nominal diameter.

11. The communication cable of claim 1, wherein the optical communication cable assembly has a minimum bend radius 15 times the nominal diameter of cable assemblies during installation or 10 times the nominal diameter of cable assemblies while in service.

12. The communication cable of claim 1, wherein at least 24 pairs or higher of optical fibers are within the dual layer, opposing direction, bias woven aramid or KEVLAR^{™} type fibers.

13. The communication cable of claim 1, wherein the one or more buffer tubes are heat resistant silicone.

14. A communications system providing a fault-tolerant communications path, the system comprising one or more optical communication cable assemblies according to any one of claims 1 to 13.

15. The communication system of claim 14, wherein the one or more optical communications cable assemblies are up to 3000 feet in length and are joined through a media converter.
